# EUROPÄISCHE PATENTSCHRIFT

(11) **EP 2 617 941 B1**
(45) Veröffentlichungstag und Bekanntmachung des Hinweises auf die Patenterteilung: **13.03.2019**
(21) Anmeldenummer: 12151336.0
(22) Anmeldetag: 17.01.2012
(51) Int. Cl.: F01D 5/08, F02C 6/08, F04D 29/32, F04D 29/58

(54) **Luftleitvorrichtung sowie Verfahren zur Herstellung einer Luftleitvorrichtung, Rotor und Strömungsmaschine**
Ventilation device and method for producing a ventilation device, rotor and fluid flow engine
Dispositif de conduite d'air ainsi que procédé de fabrication d'un dispositif de conduite d'air, rotor et turbomachine

(43) Veröffentlichungstag der Anmeldung: 24.07.2013
(73) Patentinhaber: MTU Aero Engines AG, 80995 München (DE)
(72) Erfinder: Heß, Thomas, 81541 München (DE); Dr. Bayer, Erwin, 85221 Dachau (DE); Hiller, Sven, 85244 Röhrmoos (DE); Geiger, Peter, 80997 München (DE)

(56) Entgegenhaltungen:
- EP-A2- 2 123 860
- EP-A2- 2 243 928
- DE-A1- 3 001 685
- US-A- 3 398 881
- US-A1- 2003 223 855
- US-A1- 2006 239 812
- US-A1- 2007 053 770
- US-B2- 7 828 514

## Beschreibung

Die Erfindung betrifft einen Rotor mit einer Luftleitvorrichtung für Strömungsmaschinen nach dem Oberbegriff des Patentanspruchs 1 sowie eine Strömungsmaschine.

Zur Kühlung von Turbinenkomponenten von Strömungsmaschinen wird häufig mittels einer Luftleitvorrichtung verdichterseitig Luft abgezapft und zur stromabwärtigen Turbine geführt. Eine herkömmliche Luftleitvorrichtung hat wie in dem Patent US 5,472,313 gezeigt eine Vielzahl von radialen Rohren, die zwischen verdichterseitigen Rotorscheiben angeordnet sind und mittels denen Luft als Kühlluft aus einem von einer Hauptströmung durchströmten Ringraum radial nach innen in Richtung einer Rotorwelle zur Erzeugung einer sich entlang der Rotorwelle ausbildenden axialen Kühlluftströmung geführt wird. Zur Reduzierung von Druckverlusten sind die Rohre auslassseitig in Richtung der zu erzielenden Kühlluftströmung orientiert. Bei einer in dem europäischen Patent EP 1 318 272 B1 gezeigten Alternative sind die Rohrauslässe radial orientiert und gegenüber einem konischen rotorwellenseitigen Umlenkring zur Umlenkung der Kühlluft in axialer Richtung angeordnet. Bei einer in dem Patent US 7,828,514 B2 gezeigten Luftleitvorrichtung wird zur Reduzierung von Druckverlusten und zur Verbesserung der Kühlluftstromführung und somit zur Steigerung des Wirkungsgrades der Strömungsmaschine auf Luftleitrohre verzichtet und stattdessen ein Zwischenraum zwischen benachbarten Rotorscheiben in radialer Richtung beidseits geschlossen, wobei zum Abzapfen von Kühlluft in einer radial äußeren Begrenzungswand eine Vielzahl von Einlässen bzw. Einströmöffnungen und in einer radial inneren Begrenzungswand eine Vielzahl von Auslässen bzw. Ausströmöffnungen ausgebildet ist.

Die EP 2 243 928 A2 beschreibt einen Rotorläufer mit einer Anti-Wirbelkaskade einer Gasturbinenmaschine.

Die EP 2 123 860 A2 beschreibt einen Wirbelgleichrichter zum Führen von Entnahmeluftströmen zwischen zwei Rotorscheiben eines Verdichters einer Gasturbine.

Die US 2006/0239812 A1 beschreibt ein Verfahren zum Regulieren der Luftstromrate in einer Rotorwelle einer Turbomaschine.
Aufgabe der Erfindung ist es, einen Rotor mit einer optimierten Kühlung bzw. Belüftung sowie eine Strömungsmaschine mit einem optimierten Wirkungsgrad zu schaffen.
Diese Aufgabe wird gelöst durch einen Rotor mit einer Luftleitvorrichtung mit den Merkmalen des Patentanspruchs 1, sowie durch eine Strömungsmaschine mit den Merkmalen des Patentanspruchs 12.
Ein erfindungsgemäßer Rotor für Strömungsmaschinen hat eine Vielzahl von Luftleitrohren zur Führung von Luft aus einem radial äußeren Ringraum radial in Richtung einer Rotorwelle und einen Tragring zur Anordnung der Luftleitrohre in einem radial geschlossenem Zwischenraum zwischen zwei benachbarten Rotorscheiben. Erfindungsgemäß bildet der Tragring eine radial innere Begrenzung des Zwischenraums und die Luftleitrohre haben jeweils einen in Rotationsrichtung orientierten Einströmbereich. Die Luftleitvorrichtung ist derart einteilig hergestellt, dass die Luftleitrohre generativ mit dem Tragring ausgebildet sind.

Durch die in Rotationsrichtung orientierten Einströmbereiche wird der jeweilige Strömungsverlauf und somit die Strömungsführung der Kühlluft in die Luftleitrohre verbessert. Die Bildung von verlustreichen Wirbeln wird einlassseitig nahezu vollständig bzw. vollständig unterbunden, wodurch die Strömung innerhalb der Luftleitrohre beruhigt ist. Die beruhigte Strömung innerhalb der Luftleitrohre resultiert auslassseitig in einem reduzierten Druckverlust, so dass durch die erfindungsgemäße Luftleitvorrichtung Druckverluste sowohl einlass- als auch auslassseitig reduziert werden und eine verbesserte Kühlluftführung sowie eine verbesserte Kühlung der Maschinenkomponenten und eine verbesserte Rotorbelüftung erfolgt.
Die Strömungsführung lässt sich weiter verbessern, wenn die Einströmbereiche bogenförmig ausgebildet sind und in einen radialen Luftleitrohrbereich übergehen.
Die Strömungsführung lässt sich zudem stabilisieren, wenn die Luftleitrohre jeweils einen radialen Ausströmbereich aufweisen.
Die Stabilität der Luftleitvorrichtung lässt sich erhöhen, wenn die Luftleitrohre einström- und ausströmseitig eingespannt sind.

Zur weiteren Stabilisierung der Luftleitrohre können Radialstreben vorgesehen sein, die insbesondere eine Steigerung der Festigkeit im Fliehkraftfeld bewirken.

Insbesondere zur Schwingungsdämpfung der Luftleitrohre können Umfangsstreben zur gegenseitigen Stützung von benachbarten Luftleitrohren vorgesehen sein.

Um jeweils einen optimalen Betrieb der Strömungsmaschine zu ermöglichen, ist es vorteilhaft, wenn eine jeweils abgezapfte Kühlluftmenge eingestellt werden kann. Hierzu kann beispielsweise zumindest eine Ventileinrichtung zum Auf- und Zusteuern zumindest eines Luftleitrohres vorgesehen sein.

Zur Automatisierung der Ventileinrichtung ist es vorteilhaft, wenn die zumindest eine Ventileinrichtung fliehkraftaktivierbar ist, wobei je nach Ausbildung bei hohen Drehzahlen eine Aufsteuerung oder eine Zusteuerung des zumindest einen Luftleitrohres erfolgen kann.

Bevorzugterweise sind mehrere Ventileinrichtungen vorgesehen, die einteilig mit der jeweiligen Luftröhre ausgebildet sind und deren Ventilkörper jeweils einen Federabschnitt aufweist. Durch die Vielzahl von Ventileinrichtungen kann die Kühlluftmenge sensibel dosiert werden. Durch die integrale Ausbildung können die Ventileinrichtungen optimal in die Luftleitvorrichtung integriert werden.

Bei einem Ausführungsbeispiel sind die Ventileinrichtungen in den Luftleitrohren positioniert. Bei einem alternativen Ausführungsbeispiel sind die Ventileinrichtungen am Tragring positioniert. Wenn die Ventileinrichtungen in den Luftleitrohren positioniert sind, sind sie sehr gut gegen bspw. Beschädigungen bei der Montage der Luftleitvorrichtung geschützt. Wenn die Ventileinrichtungen am Tragring angeordnet sind, können sie visuell einfach inspiziert werden.

Der Federabschnitt weist vorzugsweise eine zelluläre Struktur auf. Eine derartige Struktur lässt sich generativ bequem herstellen und erlaubt definierbare elastische Verformungen.

Bei einem nicht beanspruchten Verfahren zur Herstellung einer Luftleitvorrichtung mit einem Tragring und mit einer Vielzahl von Luftleitrohren werden die Luftleitrohre integral mit dem Tragring ausgebildet.
Durch die integrale Herstellung der Luftleitvorrichtung kann eine hochbelastbare Geometrie der Luftleitrohre eingestellt werden. Ein beispielhaftes Verfahren ist ein Wachsausschmelzverfahren wie Feingießen. Alternativ können die Luftleitrohre auch mit dem Tragring verschweißt werden.
Die Strukturstabilität und somit die mechanische Belastbarkeit der Luftleitvorrichtung lassen sich weiter erhöhen, wenn die Luftleitrohre erfindungsgemäß generativ mit dem Tragring ausgebildet werden.
Durch die generative Ausbildung kann die Luftleitvorrichtung zudem gewichts- und strömungsoptimiert werden. Ferner entfällt durch die generative Ausbildung eine aufwendige Nachbearbeitung der Luftleitvorrichtung. Beispielhafte Verfahren sind Laserschmelzen (Selektive Laser Melting, SLM) und Lasersintern, wobei Laserschmelzen bevorzugt wird.
Ein erfindungsgemäßer Rotor hat zumindest eine Luftleitvorrichtung. Diese ermöglicht eine verlustarme Kühlung von Rotorkomponenten. Die Luftleitvorrichtung bewirkt eine verbesserte Belüftung bzw. eine optimierte Umströmung des Rotors mit Sekundärluft, um zum Beispiel radiale Temperaturgradienten -insbesondere bei transienten Vorgängen wie zum Beispiel eine Beschleunigung -abzubauen und den Rotor thermisch schneller zu machen, was sich auf die Spannungen und Dehnungen im Rotor auswirkt. Da die Luftleitvorrichtung durch die einteilige und generative Herstellung gewichtsreduziert ist, zeichnet sich ein derartiger Rotor ebenfalls durch ein ruhiges Laufverhalten aus.
Eine erfindungsgemäße Strömungsmaschine hat einen Rotor mit einer Luftleitvorrichtung und zeichnet sich hierdurch durch eine verbesserte Kühlluftströmung und eine verbesserte Kühlung der Rotorkomponenten sowie durch eine verbesserte Belüftung des Rotors aus, was in einem optimierten Wirkungsgrad resultiert.
Sonstige vorteilhafte Ausführungsbeispiele der Erfindung sind Gegenstand weiterer Unteransprüche.

Im Folgenden werden bevorzugte Ausführungsbeispiele der Erfindung anhand stark vereinfachter schematischer Darstellungen näher erläutert. Es zeigen:
- Figur 1: eine Seitendarstellung einer Luftleitvorrichtung im montierten Zustand zwischen zwei Rotorscheiben,
- Figur 2: eine Axialansicht auf Ausführungsbeispiele der Luftleitvorrichtung,
- Figur 3: Strömungsquerschnitte von Luftleitrohren der Luftleitvorrichtung,
- Fig. 4 und 5: ein Ausführungsbeispiel einer Ventileinrichtung der Luftleitvorrichtung in verschiedenen Schaltstellungen, und
- Fig. 6 und 7: ein weiteres Ausführungsbeispiel einer Ventileinrichtung der Luftleitvorrichtung in verschiedenen Schaltstellungen.

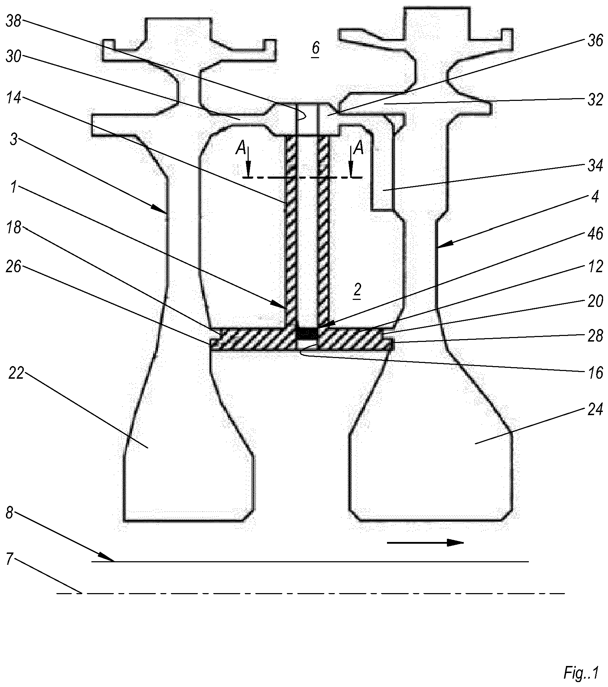

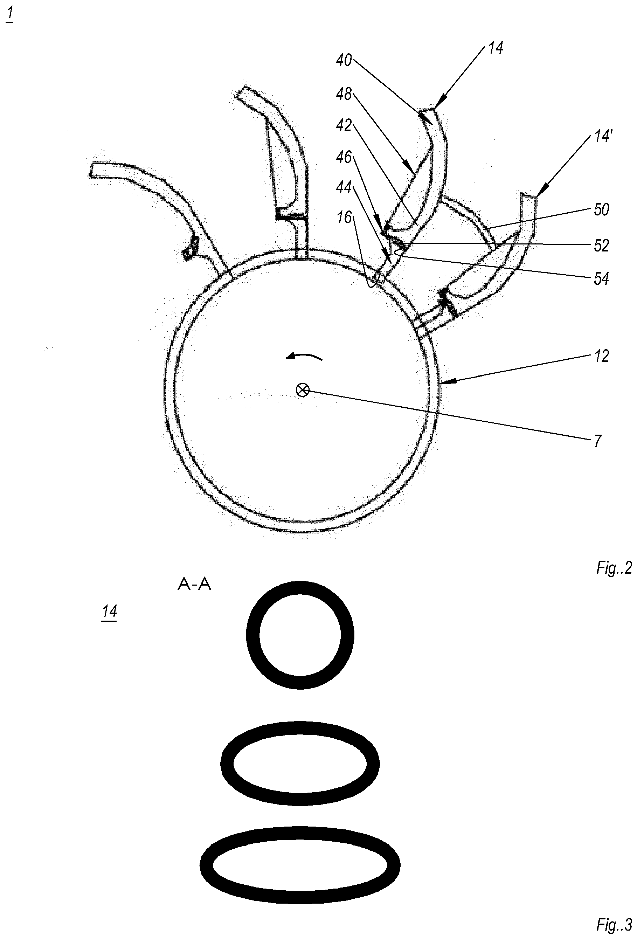

In den Figuren 1 und 2 ist eine Luftleitvorrichtung 1 zur Anordnung in einem Zwischenraum 2 zwischen zwei verdichterseitigen Rotorscheiben 3, 4 einer Strömungsmaschine wie einem Flugzeugtriebwerk in verschiedenen Ausführungsbeispielen dargestellt. Die Luftleitvorrichtung 1 dient zur Führung von Luft aus einem von einer Hauptströmung durchströmten radial äußeren Ringraum 6 radial in Richtung einer um eine Drehachse 7 rotierenden Rotorwelle 8 zur Bildung eines durch einen Pfeil angedeuteten axialen Kühlluftstroms in Richtung einer stromabwärtigen nicht gezeigten Turbine zur Kühlung deren Komponenten und zur Belüftung eines unter anderem von den Rotorscheiben 3, 4 und der Rotorwelle 8 gebildeten Rotors.
Die Luftleitvorrichtung 1 ist generativ und somit einteilig hergestellt und zeichnet sich hierdurch durch eine strömungsoptimierte Führung der Kühlluft, ein optimiertes Gewicht und hohe mechanische Belastbarkeit aus. Sie hat einen Tragring 12 sowie eine Vielzahl von über den Außenumfang gleichmäßig verteilten Luftleitrohren 14.

Gemäß Figur 1 ist der Tragring 12 mit den Luftleitrohren 14 einteilig ausgebildet und bildet mit diesen eine Vielzahl von Ausströmöffnungen 16. Der Tragring 12 umgreift die Rotorwelle 8 und ist zwischen den Rotorscheiben 3, 4 angeordnet. Er bildet im montierten Zustand der Luftleitvorrichtung 1 eine radial innere abdichtende bzw. geschlossene Begrenzung des Zwischenraums 2 und hat zur Positionierung an den Rotorscheiben 3, 4 zwei an entgegengesetzten Axialseiten ausgebildete ringartige Zurückstufungen 18, 20. Die Befestigung an den Rotorscheiben 3, 4 erfolgt bspw. mittels Presspassung oder mittels Verschraubung.
Die Rotorscheiben 3, 4 haben jeweils eine Rotornabe 22, 24 zur Positionierung von nicht gezeigten Laufschaufelreihen an der Rotorwelle 8. Die Rotornaben 22, 24 haben eine nicht bezifferte Wellenbohrung zur Positionierung am Außenumfangs der Rotorwelle 8 und weisen jeweils einen radial inneren Axialvorsprung 26, 28 zur Definition einer radialen Einbaulage des Tragrings 12 auf, dessen Zurückstufungen 18, 20 sich im montierten Zustand formschlüssig mit den Axialvorsprüngen 26, 28 im Eingriff befinden.
Des Weiteren haben die Rotornaben 22, 24 jeweils einen radial äußeren Axialflansch 30, 32 zur Bildung einer radial äußeren abdichtenden bzw. geschlossenen Begrenzung des Zwischenraums 2 sowie zur gegenseitigen Stabilisierung. Die Axialflansche 30, 32 sind abschnittsweise in Überdeckung miteinander gebracht, wobei der eine Axialflansch 30 einen abgewinkelten Endabschnitt 34 zur stirnseitigen Anlage an der benachbarten Rotornabe 24 sowie einen wandstärkenverdickten Mittelabschnitt 36 aufweist. Der Mittelabschnitt 36 dient zur endseitigen Stützung bzw. zur Aufnahme der Luftleitrohre 14 und weist eine Vielzahl von mit den Leitrohren 14 zusammenwirkenden Einströmöffnungen 38 auf.
Die Luftleitrohre 14 haben jeweils einen in Figur 2 bezifferten Einströmbereich 40, einen Halsbereich 42 und einen Ausströmbereich 44. Sie haben jeweils einen strömungsoptimierten Strömungsquerschnitt, der sich von der Einströmöffnung 38 zur Ausströmöffnung 16 radial verjüngt und wie in Figur 3 gezeigt einen abgerundeten, insbesondere einen kreisförmigen, ovalen bzw. elliptischen Strömungsquerschnitt aufweist.
Der Einströmbereich 40 ist strömungsoptimiert in Rotationsrichtung der Rotorwelle 6 gekrümmt und somit bogenförmig ausgebildet. Gemäß der Darstellung in Figur 1 rotiert die Luftleitvorrichtung 1 gegen den Uhrzeigersinn, so dass die Einströmbereiche 40 gegen den Uhrzeigersinn nach links orientiert sind. Die Krümmung des jeweiligen Einströmbereichs 40 kann dabei variieren und bspw. wie gezeigt durch eine verhältnismäßig große Krümmung erfolgen oder durch eine kleine Krümmung mit einem entsprechend kleinem Krümmugsradius, wodurch der Halsbereich 42 entsprechend verlängert ausgebildet werden würde. Er liegt quasi endseitig am Mittelabschnitt 36 des Axialflansches 30 an und umgreift eine der Eintrittsöffnungen 38, die zur Strömungsoptimierung ebenfalls in Rotationsrichtung zeigt.
Der Halsbereich 42 erstreckt sich jeweils radial von dem Einströmbereich 40 und kann eine integrale Ventileinrichtung 46 zur drehzahlabhängigen Auf- und Zusteuerung der Strömungsquerschnitte der Luftleitrohre 14 aufweisen. Zur Aufnahme der jeweiligen Ventileinrichtung 46 ist der Halsabschnitt 42 entsprechend querschnittserweitert.
Der Ausströmbereich 44 erstreckt sich radial von dem Halsbereich 42 und mündet radial in den Tragring 12. Er ist einteilig mit dem Tragring 12 ausgebildet und definiert zusammen mit dem Tragring 12 jeweils eine der Ausströmöffnungen 16. Alternativ kann der Ausströmbereich 44 in Richtung des zu erzeugenden axialen Kühlluftstroms abgewinkelt bzw. gebogen sein, in den Ausströmöffnungen 16 ein Umlenkblech angeordnet sein oder gegenüber den Ausströmöffnungen 16 ein rotorseitiger Umlenkring positioniert sein.
Zur Stabilisierung und Schwingungsdämpfung der Luftleitrohre 14 sind einteilig mit den Luftleitrohren 14 ausgebildete Stützstrukturen 48, 50 vorgesehen. Diese können als Radialstreben 48 ausgebildet sein, die sich beispielsweise radial zwischen dem Halsbereich 42 und dem Einströmbereich 40 erstrecken. Alternativ oder zusätzlich können die Stützstrukturen Umfangsstreben 50 sein, die zwei benachbarte Luftleitrohre 14, 14' gegenseitig abstützen und hierzu endseitig in dem Halsbereich 42 des benachbarten Luftleitrohrs 14, 14' und/oder an der Radialstrebe 48 befestigt sind.
Die Ventileinrichtungen 46 ermöglichen eine Auf- und Zusteuerung der Strömungsquerschnitte der Luftleitrohre 12. Sie sind fliehkraftaktivierbar und haben einen integral mit dem Halsbereich 42 ausgebildeten Ventilkörper 52, der mit einem gegenüberliegenden innenwandungsseitigen Ventilsitz 54 der Luftleitrohre 14 zusammenwirkt.

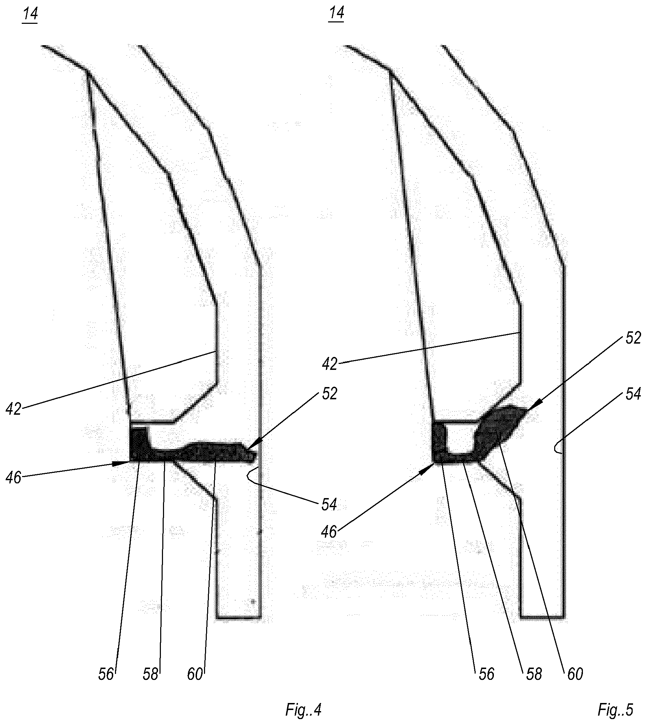

Die Ventilkörper 52 weisen wie in den Figuren 4, 5, 6 und 7 beziffert jeweils einen Befestigungsabschnitt 56 zur Befestigung in den Luftleitrohren 14, einen Federabschnitt 58 zur Ermöglichung einer elastischen Verformung der Ventilkörper 52 und einen freien Verschlussabschnitt 60 auf. Der Federabschnitt 58 hat eine individuelle Materialstruktur, die eine drehzahlabhängige elastische Verformung des Ventilkörpers 52 ermöglicht. Beispielsweise hat der Federabschnitt 58 eine zelluläre, wabenartige, porenartige oder skelettartige Materialstruktur.

Bei einem ersten in den Figuren 4 und 5 gezeigten Ausführungsbeispiel der Ventileinrichtungen 46 befinden sich der Ventilkörper 52 bei niedrigen Drehzahlen in einer als Schließstellung definierten Grundstellung, in der der jeweilige Strömungsquerschnitt zugesteuert ist und keine Kühlluft aus dem Ringraum 6 abgezapft werden kann. Der Federabschnitt 58 befindet sich in seiner entspannten Ruheposition und der Verschlussabschnitt 60 befindet sich in Anlage mit dem Ventilsitz 54.

Bei Erhöhung der Drehzahl wird der Ventilkörper 52 in eine in Figur 5 gezeigte Öffnungsstellung überführt, in der der jeweilige Strömungsquerschnitt aufgesteuert ist und Kühlluft aus dem Ringraum 6 abgezapft werden kann. Die Verschwenkung des Verschlussabschnitts 60 wird durch den Federabschnitt 58 ermöglicht, der bei steigender Drehzahl der Rotorwelle 8 aufgrund der steigenden Fliehkraft elastisch verformt wird und dabei den Verschlussabschnitt 60 von dem Ventilsitz 54 abhebt.

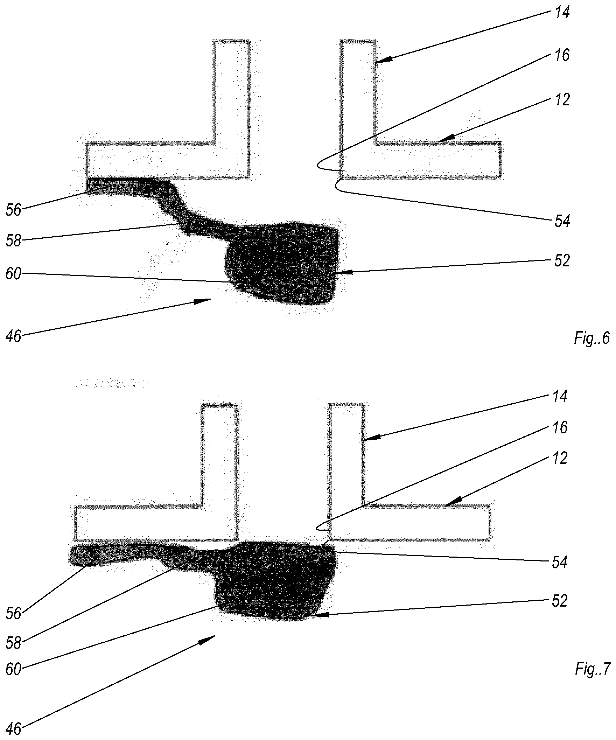

Bei einem zweiten in den Figuren 6 und 7 gezeigten Ausführungsbeispiel der Ventileinrichtungen 46 sind die Luftleitrohre 14 bei niedrigen Drehzahlen aufgesteuert und bei hohen Drehzahlen zugesteuert. Hierzu sind die Ventileinrichtungen 46 jerweils innenumfangsseitig des Tragrings 12 positioniert. Insbesondere sind sie mit ihren Befestigungsabschnitten 56 am Innenumfang des Tragrings 12 angebunden und die Ventilsitze 54 sind im Bereich der Austrittsöffnungen 16 ausgebildet.

In der in Figur 6 gezeigten Grundstellung befindet sich der Ventilkörper 52 im Gegensatz zum Ausführungsbeispiel nach den Figuren 4 und 5 in einer Öffnungsstellung, in der der jeweilige Strömungsquerschnitt aufgesteuert ist und Kühlluft aus dem Ringraum 6 abgezapft werden kann. Der Federabschnitt 58 befindet sich in einer entspannten Ruheposition und der Verschlussabschnitt 60 ist von mit dem Ventilsitz 54 abgehoben.
Bei Erhöhung der Drehzahl wird der Ventilkörper 52 in eine in Figur 7 gezeigte Schließstellung überführt, in der der jeweilige Strömungsquerschnitt zugesteuert ist und keine Kühlluft aus dem Ringraum 6 abgezapft werden kann. Die Verschwenkung des Verschlussabschnitts 60 wird wie beim vorbeschriebenen Ausführungsbeispiel nach den Figuren 4 und 5 durch den Federabschnitt 58 ermöglicht, der bei steigender Drehzahl der Rotorwelle 8 aufgrund der steigenden Fliehkraft elastisch verformt wird. Im Unterschied zum vorerwähnten Ausführungsbeispiel nach den Figuren 4 und 5 wird bei diesem Ausführungsbeispiel der Verschlussabschnitt 60 jedoch bei steigender Drehzahl dichtend gegen den Ventilsitz 54 gedrückt.
Wie in Figur 2 gezeigt können bei einem weiteren Ausführungsbeispiel die Ventileinrichtungen 46 auch unmittelbar stromaufwärts der Ausströmöffnungen 16 und somit in den Ausströmbereichen 44 der Luftleitrohre 14 angeordnet sein.
Selbstverständlich sind die Ventileinrichtungen 46 auch derart einstellbar, dass die Verschlussabschnitte 60 in der Schließstellung in einem minimalen Abstand von dem jeweiligen Ventilsitz 54 beabstandet sind und somit jeweils ein minimaler Strömungsquerschnitt eingestellt ist, so dass auch bei zugesteuerten Ventileinrichtungen 46 eine Mindestmange an Kühlluft aus dem Ringraum 6 abgezapft werden kann.
Wie bereits eingangs erwähnt werden die Luftleitvorrichtungen 1 einteilig mittels eines generativen Herstellverfahrens hergestellt. Hierzu wird ein geeignetes Metallpulver schichtweise auf eine Unterlage aufgebracht und mittels eines hochenergetischen Strahls wie einem Elektronenstrahl oder einem Laserstrahl belichtet. Der hochenergetische Strahl wird in Bahnen über die obere Pulverschicht geführt, wodurch diese aufgeschmolzen und mit der vorhergehenden Pulverschicht verbunden wird. Je nach dem zu fertigenden Element 12, 14, 46, 48, 50, bzw. nach dem zu fertigenden Elemententeil 40, 42, 44, 52, 54, 56, 58, 60 werden zur Struktur-, Gewichts- und Funktionsoptimierung die Verfahrensparameter geändert bzw. individuell eingestellt.

Offenbart sind eine Luftleitvorrichtung für Strömungsmaschinen, mit einer Vielzahl von Luftleitrohren zur Führung von Luft aus einem äußeren Ringraum in Richtung einer Rotorwelle und mit einem Tragring zur Anordnung der Luftleitrohre in einem radial geschlossenem Zwischenraum zwischen zwei benachbarten Rotorscheiben wobei im montierten Zustand der Luftleitvorrichtung der Tragring eine radial innere Begrenzung des Zwischenraums bildet und die Luftleitrohre jeweils einen in Rotationsrichtung orientierten Einströmbereich haben, ein Verfahren zur Herstellung einer derartigen Luftleitvorrichtung, ein Rotor mit zumindest einer derartigen Luftleitvorrichtung sowie eine Strömungsmaschine mit einem derartigen Rotor.

### Bezugszeichenliste

- 1: Luftleitvorrichtung
- 2: Zwischenraum
- 3: Rotorscheibe
- 4: Rotorscheibe
- 6: Ringraum
- 7: Drehachse
- 8: Rotorwelle
- 10: Kühlluftraum
- 12: Tragring
- 14, 14': Luftleitrohr
- 16: Ausströmöffnung
- 18: Zurückstufung
- 20: Zurückstufung
- 22: Rotornabe
- 24: Rotornabe
- 26: Axialvorsprung
- 28: Axialvorsprung
- 30: Axialflansch
- 32: Axialflansch
- 34: Endabschnitt
- 36: Mittelabschnitt
- 38: Einströmöffnung
- 40: Einströmbereich
- 42: Halsbereich
- 44: Ausströmbereich
- 46: Ventileinrichtung
- 48: Radialstrebe
- 50: Umfangsstrebe
- 52: Ventilkörper
- 54: Ventilsitz
- 56: Befestigungsabschnitt
- 58: Federabschnitt
- 60: Verschlussabschnitt

## Patentansprüche

1. Rotor (8) mit zumindest einer Luftleitvorrichtung (1) für Strömungsmaschinen, mit einer Vielzahl von Luftleitrohren (14) zur Führung von Luft aus einem äußeren Ringraum (6) radial in Richtung einer Rotorwelle (8) und mit einem Tragring (12) zur Anordnung der Luftleitrohre (14) in einem radial geschlossenem Zwischenraum (2) zwischen zwei benachbarten Rotorscheiben (3, 4), wobei der Tragring (12) im montierten Zustand der Luftleitvorrichtung (1) eine radial innere Begrenzung des Zwischenraums (2) bildet und die Luftleitrohre (14) jeweils einen in Rotationsrichtung orientierten Einströmbereich (38, 40) haben, **dadurch gekennzeichnet, dass** die Luftleitvorrichtung (1) derart einteilig hergestellt ist, dass die Luftleitrohre (14) generativ mit dem Tragring (12) ausgebildet sind.

2. Rotor (8) nach Anspruch 1, wobei die Einströmbereiche (40) bogenförmig ausgebildet sind und in einen radialen Luftleitrohrbereich (42) übergehen.

3. Rotor (8) nach Anspruch 1 oder 2, wobei die Luftleitrohre (14) jeweils einen radialen Ausströmbereich (44) aufweisen.

4. Rotor (8) nach Anspruch 1, 2 oder 3, wobei die Luftleitrohre (14) einström- und ausströmseitig eingespannt sind.

5. Rotor (8) nach einem der vorhergehenden Ansprüche, wobei Radialstreben (48) zur Stützung der Luftleitrohre (14) vorgesehen sind.

6. Rotor (8) nach einem der vorhergehenden Ansprüche, wobei Umfangsstreben (50) zur Stützung von benachbarten Luftleitrohren (14) vorgesehen sind.

7. Rotor (8) nach einem der vorhergehenden Ansprüche, wobei zumindest eine Ventileinrichtung (46) zum Auf- und Zusteuern zumindest eines der Luftleitrohre (14) vorgesehen ist.

8. Rotor (8) nach Anspruch 7, wobei die zumindest eine Ventileinrichtung (46) fliehkraftaktivierbar ist.

9. Rotor (8) nach Anspruch 8, wobei mehrere Ventileinrichtungen (46) vorgesehen sind, deren Ventilkörper (52) jeweils einen elastischen Federabschnitt (58) aufweisen und die einteilig mit der jeweiligen Luftleitröhre (14) ausgebildet sind.

10. Rotor (8) nach Anspruch 9, wobei mehrere Ventileinrichtungen (46) in den Luftleitrohren (14) oder am Tragring (12) positioniert sind.

11. Rotor (8) nach Anspruch 9 oder 10, wobei der elastische Federabschnitt (58) eine zelluläre Materialstruktur aufweist.

12. Strömungsmaschine mit einem Rotor (8) nach einem der Ansprüche 1 bis 11.

## Claims

1. Rotor (8) comprising at least one air-conducting device (1) for turbomachinery, comprising a plurality of air-conducting conduits (14) for guiding air out of an outer annular space (6) radially in the direction of a rotor shaft (8) and comprising a bearing ring (12) for arranging the air-conducting conduits (14) in a radially closed intermediate space (2) between two adjacent rotor disks (3, 4), the bearing ring (12) forming a radially internal boundary of the intermediate space (2) when the air-conducting device (1) is mounted and the air-conducting conduits (14) each having an inflow region (38, 40) oriented in the direction of rotation, **characterized in that** the air-conducting device (1) is manufactured as a single piece such that the air-conducting conduits (14) are generatively formed together with the bearing ring (12).

2. Rotor (8) according to claim 1, wherein inflow regions (40) are curved and transition into a radial air-conducting conduit region (42).

3. Rotor (8) according to either claim 1 or claim 2, wherein the air-conducting conduits (14) each have a radial outflow region (44).

4. Rotor (8) according to any of claims 1, 2 or 3, wherein the air-conducting conduits (14) are clamped at the inflow and outflow ends.

5. Rotor (8) according to any of the preceding claims, wherein radial braces (48) are provided to support the air-conducting conduits (14).

6. Rotor (8) according to any of the preceding claims, wherein circumferential braces (50) are provided to support adjacent air-conducting conduits (14).

7. Rotor (8) according to any of the preceding claims, wherein at least one valve apparatus (46) is provided to open and close at least one of the air-conducting conduits (14).

8. Rotor (8) according to claim 7, wherein the at least one valve apparatus (46) can be activated by centrifugal force.

9. Rotor (8) according to claim 8, wherein a plurality of valve apparatuses (46) are provided, the valve bodies (52) of which each comprise a resilient spring portion (58) and are formed in a single piece with the corresponding air-conducting conduit (14).

10. Rotor (8) according to claim 9, wherein a plurality of valve apparatuses (46) are positioned in the air-conducting conduits (14) or on the bearing ring (12).

11. Rotor (8) according to either claim 9 or 10, wherein the resilient spring portion (58) has a cellular material structure.

12. Turbomachine comprising a rotor (8) according to any of claims 1 to 11.

## Revendications

1. Rotor (8) doté d'au moins un dispositif de conduit d'air (1) destiné à des turbomachines, avec une multiplicité de tubes de conduit d'air (14) prévus pour l'alimentation radiale en air provenant d'un espace annulaire (6) extérieur en direction d'un arbre de rotor (8) et avec un anneau de support (12) prévu pour l'agencement des tubes de conduit d'air (14) dans un espace intermédiaire (2) radial fermé entre deux disques de rotor (3, 4) voisins, l'anneau de support (12) formant une délimitation radiale intérieure de l'espace intermédiaire (2) à l'état monté du dispositif de conduit d'air (1) et les tubes de conduits d'air (14) possédant respectivement une zone d'entrée (38, 40) orientée dans le sens de rotation, **caractérisé en ce que** le dispositif de conduit d'air (1) est fabriqué d'une seule pièce de sorte que les tubes de conduit d'air (14) ont une conception générative avec l'anneau de support (12).

2. Rotor (8) selon la revendication 1, dans lequel les zones d'entrée d'écoulement (40) sont conçues en forme de courbes et se transforment en une zone de tube de conduit d'air (42) radiale.

3. Rotor (8) selon la revendication 1 ou 2, dans lequel les tubes de conduit d'air (14) présentent respectivement une zone de sortie d'écoulement (44) radiale.

4. Rotor (8) selon les revendications 1, 2 ou 3, dans lequel les tubes de conduit d'air (14) sont encastrés du côté de l'entrée d'écoulement et du côté de la sortie d'écoulement.

5. Rotor (8) selon l'une des revendications précédentes, dans lequel des bras radiaux (48) sont prévus pour le soutien des tubes de conduit d'air (14).

6. Rotor (8) selon l'une des revendications précédentes, dans lequel des bras périphériques (50) sont prévus pour le soutient des tubes de conduit d'air (14) voisins.

7. Rotor (8) selon l'une des revendications précédentes, dans lequel au moins un dispositif de soupape (46) est prévu pour la commande d'ouverture et de fermeture d'au moins un des tubes de conduit d'air (14).

8. Rotor (8) selon la revendication 7, dans lequel l'au moins un dispositif de soupape (46) peut être activé par la force centrifuge.

9. Rotor (8) selon la revendication 8, dans lequel plusieurs dispositifs de soupape (46) sont prévus, dont les corps de soupape (52) présentent respectivement une portion de ressort élastique (58) et qui sont conçus en une seule pièce avec les tubes de conduit d'air (14) respectifs.

10. Rotor (8) selon la revendication 9, dans lequel plusieurs dispositifs de soupape (46) sont positionnés dans les tubes de conduit d'air (14) ou sur l'anneau de support (12).

11. Rotor (8) selon la revendication 9 ou 10, dans lequel la portion de ressort élastique (58) présente une structure de matériau cellulaire.

12. Turbomachine dotée d'un rotor (8) selon l'une des revendications 1 à 11.
